# EUROPEAN PATENT SPECIFICATION

(11) **EP 3 498 565 B1**
(45) Date of publication and mention of the grant of the patent: **25.01.2023**
(21) Application number: 17206978.3
(22) Date of filing: 13.12.2017
(51) Int. Cl.: B61D 17/20, B60D 5/00

(54) **DEVICE FOR SUPPORTING A LOAD OF A GANGWAY STRUCTURE BETWEEN TWO CARS, A GANGWAY FOR CONNECTING A FIRST CAR WITH A SECOND CAR AND ALLOWING PASSAGE OF PASSENGERS FROM THE FIRST CAR TO THE SECOND CAR, MULTI-CAR VEHICLE COMPRISING A GANGWAY AND TWO CARS WHICH ARE CONNECTED BY THE GANGWAY**
VORRICHTUNG ZUM TRAGEN EINER LAST EINES ÜBERGANGS ZWISCHEN ZWEI WAGEN, EIN ÜBERGANG ZUM VERBINDEN EINES ERSTEN WAGENS MIT EINEM ZWEITEN WAGEN ZUR ERMÖGLICHUNG DES DURCHGANGS VON PASSAGIEREN AUS DEM ERSTEN WAGEN IN DEN ZWEITEN WAGEN, FAHRZEUG MIT MEHREREN WAGEN MIT EINEM ÜBERGANG UND ZWEI WAGEN, DIE DURCH DEN ÜBERGANG MITEINANDER VERBUNDEN SIND
DISPOSITIF POUR SUPPORTER UNE CHARGE D'UNE STRUCTURE DE PASSERELLE ENTRE DEUX CABINES, PASSERELLE PERMETTANT DE RELIER UNE PREMIÈRE CABINE À UNE SECONDE CABINE ET PERMETTANT LE PASSAGE DE PASSAGERS DE LA PREMIÈRE À LA SECONDE CABINE, VÉHICULE À PLUSIEURS CABINES COMPRENANT UNE PASSERELLE ET DEUX VOITURES QUI SONT CONNECTÉES PAR LA PASSERELLE

(43) Date of publication of application: 19.06.2019
(73) Proprietor: Dellner Couplers AB, 791 95 Falun (SE)
(72) Inventor: HEDH, Frederik, 77434 Avesta (SE); SMITH, Graham, Wotton under Edge GL12 7DH (GB)
(74) Representative: Klunker IP Patentanwälte PartG mbB

(56) References cited:
- EP-A1- 2 500 230
- EP-A1- 3 266 629
- DE-U1-202015 103 938
- JP-A- 2006 240 349

## Description

The invention pertains to a device that is suitable to support a load of a gangway structure, which gangway is suitable to connect a first car with a second car and to allow passage of passengers from the first car to the second car. The invention also pertains to a gangway, which gangway is suitable to connect a first car with a second car and to allow passage of passengers from the first car to the second car. The invention also pertains to a multi-car vehicle comprising a gangway and a first and a second car.

Multi-car vehicles are known in different designs and in different forms of adaptation for uses. Multi-car vehicles, for example, railway-bound trains (street cars and subway-trains also being considered as such trains) are known and are known for the purpose of transporting passengers as well as transporting goods. Further types of multi-car vehicles can be magnetic railway trains or can be buses (road buses as well as buses travelling on fixed tracks). A car of a multi-car vehicle can be a self-supporting car, whereby the car has sufficient wheels that are placed at sufficient locations such that the car can stand by itself without being supported by other cars, for example a three-wheeled car, a four wheeled car or a car with even more wheels placed at suitable locations. A car of a multi-car vehicle can also be of the non-self-supporting type, whereby the car has no wheels or only wheels provided in such number or arranged at such a place that the car cannot stand by itself, but is vertically supported by at least one neighboring car.

The present invention inter alia pertains to a gangway that can in a preferred embodiment be used with such types of multi-car vehicles and is suitable to connect a first car with a second car and to allow passage of passengers from the first car to the second car. In the majority of embodiments, the cars of the multi-car vehicle will be connected by a separate connecting device, for example a coupler, that connects the cars in a manner allowing the transmittal of substantial pulling and pushing forces. In the majority of cases, the gangway is designed separately and predominantly designed with the requirements for the passage of passengers from the first car to the second car in mind.

A gangway is typically suitable to shield the passenger from outside influences. In this context the gangway usually ensures that the passenger is shielded from the outside in all operational modes that the gangway will take. Further, gangways should preferably have a large internal width that allows easy passage of the passengers from the one car to the other car.

It is known that the gangway can have a bellows which can define at least a part of the envelope of the gangway, for example defines the outward facing part of the sidewalls and the ceiling of the gangway, while being open below the parts of the floor of the gangway that are intended for the passenger to tread on, or for example defines the outward facing part of the sidewalls, the floor and the ceiling of the gangway, thus fully encompassing the gangway while only being open at the front of the gangway that faces the one car and the back of the gangway that faces the other car. The bellows is a structure or structural element of the gangway.

The bellows can be of polymer material and is fastened to support hoops made from vacuum moulded panels. In a preferred embodiment, the bottom panel of the bellows can be removed for maintenance access. In a preferred embodiment, the bellows is a polymer laminate with exterior fabric layer that has printed pattern on it for aesthetic appearance.

Further, it is known that the gangway can have a series of hoops, which can have an essentially rectangular, sometimes quadratic shape, wherein the corners can be rounded or chamfered or bevelled. A respective hoop can be made up of joint together beams. The hoop can envelope an area that is large enough for a passenger to pass through. Preferably at least at somewhere along the circumference of the hoop, the distance between to opposite points on the hoop is larger than 1,5m, preferably larger than 1,75m, especially for Metros and can be less than that for high-speed or intercity trains.

The bellows can be attached to the hoops. This allows the hoops to support the bellows. Alternatively, a separate support structure for the bellows can be provided.

The structure or a structural element of the gangway, which can be the bellows, hoops, floor, sidewall and/or ceiling or at least a part of it, often has to be supported between the two cars connected by the gangway. It is common to use a designated support plate fixed to the coupler linking two cars of the vehicle, often using wear material as contact surface to the gangway, as support. Sometimes it is not possible or not desired to use the coupler as support. One solution to use a structural element of the gangway is shown in DE 202015103938 U1, but it consumes space and dictates the position of the connection point to the hoops.

EP 2 500 230 A1 discloses a device for supporting a load of a gangway structure between a first car and a second car according to the preamble of claim 1.

It is an object of the invention to provide a support for the gangway, which is not connected to the coupler and allows the gangway to move freely relative to the support so that wearing of the structure, structural element and/or the gangway can be reduced.

The object is solved by a device for supporting a load of a gangway structure between two cars according to claim 1, a gangway for connecting a first car with a second car and allowing passage of passengers from the first car to the second car according to claim 11 and a multi-car vehicle comprising a gangway and two cars which are connected by the gangway according to claim 14. Further embodiments are described in the subordinate claims and the description.

The basic idea of the invention is to provide a device for supporting a load of a gangway structure between two cars that has a first beam that can be connected to the first car and a second beam that can be connected to the second car, the first beam and the second beam being connected to one another by way of a connector that allows movement of the first beam relative to the connector and allows movement of the second beam relative to the connector. This arrangement allows for the first beam to move relative to the second beam. The movement of the first beam relative to the second beam allows the device according to the invention to take up a first operational state, wherein the device has a maximum extend, namely when the first beam and the second beam have moved apart up to a point of minimum overlap. In a second operational state, the device has a minimum extend, namely when the first beam and the second beam have moved together up to a point of maximum overlap. The possibility of the device to take up an operational position of maximum extend and an operational position of minimum extend allows the device to support an evenly stretched or evenly compressed gangway, be it in situations, where the gangway is stretched or compressed in straight line travel (for example when the multi-car vehicle accelerates or decelerates), or be it in the situations, where the multi-car vehicle is going around a bend and one side of the gangway is compressed and one side of the gangway is stretched. If in such a situation, where the multi-car vehicle is going around a bend, one device according to the invention is arranged on the inner bend side and one device according to the invention is arranged on the outer bend side, the inner bend side device will the pushed together and support the compressed side of the gangway, while the outer bend side device will be pulled apart and support the stretched side of the gangway. For this it is advantageous, if the device according to the invention can take up an operational position of maximum extend and an operational position of minimum extend, providing good support for the gangway in both operational positions and all operational positions between these two.

The structure of the gangway can directly rest on surfaces of the device, i.e. the structure can be in direct contact with the surfaces. Alternatively or in addition at least for a part of the structure intermediate elements like damping elements can be arranged between the surfaces of the device and the structure of the gangway.

A device for supporting a load of a gangway structure between a first car and a second car is provided. The device has a first beam that extends along a first longitudinal axis and has a connecting structure suitable to be connected to the first car. The device further comprises a second beam that extends along a second longitudinal axis, said second beam has a connecting structure suitable to be connected to the second car, wherein the first longitudinal axis is parallel to the second longitudinal axis.

It is a preferred embodiment of the invention that the device has an operational position of maximum extend and an operational position of minimum extend and that the transition from the operational position of maximum extend to the operational position of minimum extend is achieved by a movement of the first beam along its longitudinal axis and/or a movement of the second beam along its longitudinal axis. As part of this preferred embodiment it is preferred that in the transition from the operational position of maximum extend to the operational position of minimum extend the device compresses along a straight line. This goal is made easier, if the first longitudinal axis is parallel to the second longitudinal axis. It is acknowledged that devices that are used in the context of multi-car vehicles, especially trains, need to allow for play between parts, especially in order to prevent the built-up of restoring forces. It is for this reason that the feature according to which the first longitudinal axis is parallel to the second longitudinal axis is to be understood to mean that in the majority of operational positions that the device can take up, the first longitudinal axis is parallel to the second longitudinal axis, allowing for a minority of operational positions, where due to play the first longitudinal axis is not parallel to the second longitudinal axis, for example if the first beam tilts a little relative to the second beam. In a preferred embodiment, the device has no operational position, where the angle between the first longitudinal axis is larger than 30°. Preferably the device has no operational position, where the angle between the first longitudinal axis is larger than 20°. Preferably the device has no operational position, where the angle between the first longitudinal axis is larger than 15°. Preferably the device has no operational position, where the angle between the first longitudinal axis is larger than 10°.

Preferably the device has no operational position, where the angle between the first longitudinal axis is larger than 5°.

The device has a connector. The connector has a first support surface that extends in a direction parallel to the first longitudinal axis, whereby an element of the first beam is supported by the first support surface and can move along the first support surface. The connector has a second support surface that extends in a direction parallel to the second longitudinal axis, whereby an element of the second beam is supported by the second support surface and can move along the second support surface.

In other words, preferably each of the first and second beam is dedicated to a corresponding support surface of the connector. Each beam can interact with a support surface of the connector. A direct contact with the transfer of force between the first beam and the second beam at least for one direction of force, preferably the direction of force that the weight of the gangway will apply to the device is preferably omitted. The connector therefore acts as an intermediate element between the first beam and the second beam that can stabilise the relative position of the first beam relative to the second beam and/or can transfer a load from one beam to another beam and/or in general distribute the load from the gangway to the first beam and/or second beam.

Preferably the first support surface is a longitudinal surface that has a longer extend in the direction parallel to the first longitudinal axis than in a direction perpendicular to the first longitudinal axis. Preferably the second support surface is a longitudinal surface that has a longer extend in the direction parallel to the second longitudinal axis than in a direction perpendicular to the second longitudinal axis. According to the invention, the first support surface and the second support surface lie in the same horizontal plane. Preferably the first support surface is a rectangular surface. Preferably the second support surface is a rectangular surface.

In an alternative embodiment, the first support surface and/or the second support surface preferably is the surface of a channel or trough, especially a channel or a trough along which a ball of a bearing can roll, preferably can roll along a straight line. Preferably the first support surface and/or the second support surface is the surface of a horizontally orientated channel or trough. Preferably the channel or trough that forms the first support surface extends parallel to the first longitudinal axis. Preferably the channel or trough that forms the second support surface extends parallel to the second longitudinal axis. Preferably the bottom of the channel or trough that forms the first support surface lies in the same plane, preferably the same horizontal plane than the bottom of the channel or trough that forms the second support surface.

In a preferred embodiment the position of the first support surface on the connector relative to the position of the second support surface on the connector is fixed. The first support surface and the second support surface preferably keep the same relative position to each other regardless of the operational position of the device.

The orientation of the first beam and the second beam is horizontal. The first beam and the second beam are placed next to each other. The first longitudinal axis and the second longitudinal axis lie in the same horizontal plane. Typically, the longitudinal axis of the beam is substantially parallel to the longitudinal extension of the train or the first and/or second car and thus parallel to the direction of straight line travel. The connector is adapted such that it can hold the first and the second beam next to each other. For an ease of the manufacturing process the connector holds the beams next to each other.

The load of the gangway structure is supported by the first beam and the second beam.

The connection between the connecting structure and the first car and/or second car can be a direct connection, for example the connecting structure can be welded to the car, or can be an indirect connection, for example the connecting structure is welded to an intermediate element that is welded to the car.

The beams and the connector are preferably adapted such that the first beam and the second beam are coupled by the connector to move in opposite directions relative to the beam in a translational direction along the longitudinal axis of the beam that is preferably parallel to the direction of the straight line travel of the cars. Preferably, the first beam and the second beam are coupled by the connector to move at least substantially the same distance. This can be achieved by approximately the same frictional forces between the first beam and the connector compared to the second beam and the connector, especially in case the device takes most of the load of the gangway in the longitudinal centre of the device, and therefore distributing the load approximately equal to both cars.

Additionally, since the device supports the gangway, a mechanical link can be established such that the spring forces of the gangway, typically caused by its bellows, scaffold and/or the gangway structure, can exert substantially symmetric restoring forces that can result in a self-centring effect for the connector and therefore can lead to a compulsory coupling of the movement of the two beams. Due to this optionally possible self-centring of the connector by - to a certain extent - the compulsory coupling of the movement of the beams, a direct control of the gangway structure can be achieved. This can lead to a governing of the gangway movement such that the movement is predictable. The gangway can therefore be supported without substantial rotation of the gangway.

In a preferred embodiment a spring is provided that is loaded if the connector leaves a preferred position relative to the first beam. In a preferred embodiment a spring is provided that is loaded if the connector leaves a preferred position relative to the second beam. Such a spring can be a coil spring arranged inside a hollow first beam towards one end of the first beam that comes into contact with a first sliding means arranged to slide inside the hollow first beam. If the first sliding means moves out of a preferred position of the first sliding means (and hence the connector) relative to the first beam, the spring will be loaded and will apply a restoring force onto the first sliding means that attempts to restore the preferred position. Such a spring can be a coil spring arranged inside a hollow second beam towards one end of the second beam that comes into contact with a second sliding means arranged to slide inside the hollow second beam. If the second sliding means moves out of a preferred position of the second sliding means (and hence the connector) relative to the second beam, the spring will be loaded and will apply a restoring force onto the second sliding means that attempts to restore the preferred position.

When subjected to a curve, the multi-car vehicle passes the curve first with the first car, then the gangway and then the second car. Due to the curve the first beam (in the direction of the multi-car vehicle) is subjected to a force which will lead to a longitudinal movement of the first beam connected to the first car by the respective connecting structure. The first beam moves in the longitudinal direction of the connector back or forth as a function of the kind of curve, i.e. whether it is a right hand bend or a left hand bend. By the formation of a connection by the connector the movement of the first beam leads to a response moving the connector relative to the second beam.

Thus, a device is provided by which a gangway structure can be supported and the gangway structure can rest on a surface of the beam. Therefore, the gangway or gangway structure can at least substantially rest on the device, wherein the structure supported by the device can be connected to one of the cars by an end element, which connects the structure supported by the device to one of the cars.

According to the invention the term "structure" encompasses a structural element of the gangway, which can be one or more of the elements of the group comprising bellows, hoops, floor, sidewall and/or ceiling or at least a part of it, which has to be supported between the two cars connected by the gangway.

In a preferred embodiment the connector of the device has a first sliding means, whereby the first support surface is arranged on the first sliding means. Preferably, the connector has a second sliding means, whereby the second support surface is arranged on the second sliding means, whereby the sliding means are connected to each other with fastening means.

In this embodiment, an element of the first beam is supported by the first support surface on the first sliding means. Preferably the element of the first beam that is supported by the first support surface on the first sliding means is a surface, preferably a flat surface. Preferably flat surface is a horizontal surface. Preferably the flat surface has a longer extend in the direction parallel to the first longitudinal axis than in a direction perpendicular to the first longitudinal axis. Preferably the flat surface is a rectangular surface.

In this embodiment, an element of the second beam is supported by the second support surface on the second sliding means. Preferably the element of the second beam that is supported by the second support surface on the second sliding means is a surface, preferably a flat surface. Preferably flat surface is a horizontal surface. Preferably the flat surface has a longer extend in the direction parallel to the second longitudinal axis than in a direction perpendicular to the second longitudinal axis. Preferably the flat surface is a rectangular surface.

Preferably the flat surface of the first beam that is supported by the first support surfaces on the first sliding means is in the same plane than the flat surface of the second beam that is supported by the second support surfaces on the second sliding means.

In a preferred embodiment, the fastening means that connects the first sliding means with the second sliding means directly connects the first sliding means to the second sliding means such that a surface section of the first sliding means contacts a surface section of the second sliding means. In this case the fastening means can be made up of bolts or screws or can even be a glue that glues together the two sliding means or can be a weld that welds together the two sliding means.

In an alternative embodiment, the fastening means that connects the first sliding means with the second sliding means contains a connection block arranged between a surface section of the first sliding means and a surface section of the second sliding means. The respective surface section of the first sliding means and the respective surface section of the second sliding means hence are held apart by the connection block. The connection block and the first sliding means can be separately connected to each other, separate from a connection of the connection block to the second sliding means, for example by way of individual bolts or screws or glue or welding that only connects either the connection block with the first sliding means or connects the connection block with the second sliding means. Alternatively, bolts or screws can be provided that reach from the first sliding means through the connection block to the second sliding means. Providing a connection block between the first sliding means and the second sliding means can allow for the provision of stopper surfaces or support surfaces on the connection block that can engage with surfaces of a guide that can be arranged on the first beam or the second beam.

Alternatively to being connected to each other with fastening means, the first sliding means and the second sliding means can - while being unchanged with regard to their possible designs as described above - form part of a singular body, for example a cast body or a body formed by machining from a solid body. Such a singular body also can contain a section that has the shape of the connection block described above.

Grease or oil can be provided to facilitate the sliding of the element of the first beam that is supported by the first support surface along the first support surface. Grease or oil can be provided to facilitate the sliding of the element of the second beam that is supported by the second support surface along the second support surface. The element of the first beam that is supported by the first support surface and slides along the first support surface can be surface treated, for example with a coating to reduce friction. The element of the second beam that is supported by the second support surface and slides along the second support surface can be surface treated, for example with a coating to reduce friction.

In case the first beam has the form of a profile, the corresponding first sliding means of the connector can be shaped complementary such that the effective sliding surface between the two elements is relatively big to provide a stable guide even at higher forces. In case the second beam has the form of a profile, the corresponding second sliding means of the connector can be shaped complementary such that the effective sliding surface between the two elements is relatively big to provide a stable guide even at higher forces. In case one beam has the form of a tube, the corresponding sliding means of the connector and can be of the same shape at reduced or increased cross section such that during a relative movement of one beam and the corresponding sliding means the sliding means surround the inner or outer surface of the beam similar to a telescope mechanics.

The contact surface between one beam and the corresponding sliding means is preferably parallel related to the longitudinal axis, but can also be slightly conical, globally or in several sections. Hereby, especially the stiffness and/or the forces exerted by the device can be controlled and adapted to desired characteristics, for example such that the necessary force for a relative movement of one beam and its corresponding sliding means increases or decreases at the end positions and/or in the central position of the connector. The connected sliding means can ideally be centred by the movement of the sliding means. An approximately centred support for the gangway structure can then better follow a curve, the gangway and/or the two cars which are connected by the gangway are subjected to move.

By the device a compulsory guide can be obtained for one of the two sliding means in response to the movement of the other sliding means with regard to the beam.

The sliding means can be guided by the guiding which can be formed by an opening or aperture in the beam which has an elongated shape in the longitudinal direction of the beam. The aperture or opening can be open at one end of the elongated shape. The elongated shape can be adapted to the shape of the connection block so that the width of the connection block in the direction transverse to the movement corresponds to the respective width of the aperture or opening.

According to a preferred embodiment, the beams can be moved into a position in which the distance between the connecting structures of the two beams is smaller than the length of one beam (compressed position). Further, the beams can be moved into a further position in which the distance between the connecting structures of the two sliding means is bigger than the length of one beam, preferably approximately the length of both beams together (extended position). In a preferred in the compressed position the beams are fully (directly) supported by the sliding means, the sliding means hence having an appropriate length.

In a preferred embodiment, the first beam and/or second beam comprises a hollow structure by which the corresponding sliding means can be at least partially surrounded preferably in circumference direction of the sliding means. In another preferred embodiment, the first sliding means and/or second sliding means comprises a hollow structure by which the corresponding beam can be at least partially surrounded preferably in circumference direction of the beam.

A section of one beam can function as a sleeve preferably for a section of the corresponding sliding means. The sliding means can at least partly move within the beam, which can be situated or positioned between the two cars so that the movement of the sliding means can be obtained without the need to provide additional space in or at the cars. A reduction or elimination of space needed in the cars for the movement of sliding means with regard to the beam and the supporting surface on the connector and/or beam can be obtained. The same is true, if the sliding means functions as a sleeve to the corresponding beam.

The first beam and/or the second beam can have the shape of a bar or a tube or a flattened steel bar. It can also be thought of a profile in general, preferably having substantially the same cross section along its longitudinal axis. Preferably the first beam and/or the second beam is a tube of rectangular cross section.

The first beam and/or the second beam preferably comprise metal, especially aluminium alloys or steel, but also composite materials are possible to obtain a sufficient stability for supporting the gangway in all operational modes. The aforementioned features of this paragraph can entirely or partly apply to the connector.

In another preferred embodiment, the device can comprise fastening means which extend through a guide provided in the first beam and/or a guide provided in the second beam. The guide can assist in influencing the direction of movement that the fastening means and hence the first sliding means and the second sliding means take relative to the first beam and/or the second beam.

Preferably, the fastening means connect the first support surface and the second support surface of the connector. In a special embodiment, the fastening means connect or couple two preferably straight profiles or tubes of the connector. Also preferred, the first and the second support surface are connected next to each other approximately at the endings of these elements in order to obtain one elongated structure. For reasons of stability and/or for capsuled sliding means the first beam and/or the second beam can have an elongated recess in the wall substantially parallel to the longitudinal axis through which the fastening means and/or an adapter element and/or a connection block can extend. It can also be thought of a bended connector wherein the first support surface and the second support surface are made of a single element or metal piece.

It can further be thought of a connection of the first and the second support surface before each other with the help of the aforementioned fastening means. The fastening means can for example comprise screws, rivets, bolts, but also welded joints and/or special adapters. It can also be thought of a connector wherein the first support surface and the second support surface are one single element or metal piece.

In a preferred embodiment the fastening means are connecting at least inner portions in the longitudinal direction of at least two sliding means and/or support surfaces of the connector. Preferably, the endings of two sliding means and/or support surfaces are connected with the fastening means. It can also be thought of a welded joint that is connecting the inner portions of two sliding means and/or support surfaces.

In another preferred embodiment the beams are substantially flush with a horizontal plane perpendicular to the direction of the load on the device. Hereby friction and wear maybe reduced especially in case the gangway with its load is positioned directly on the device without further intermediate elements that for example flatten possible edges, cants and angles of the device and/or the gangway.

The first beam has a first load supporting surface. The first load supporting surface is a flat surface. Preferably the load supporting surfaces forms at least 60%, preferably at least 70%, preferably at least 80%, preferably at least 90% of the upward facing surface of the first beam and especially preferred takes up the complete upward facing surface of the first beam.

The second beam has a second load supporting surface. The second load supporting surface is a flat surface. Preferably the load supporting surfaces forms at least 60%, preferably at least 70%, preferably at least 80%, preferably at least 90% of the upward facing surface of the second beam and especially preferred takes up the complete upward facing surface of the second beam.

On the first load supporting surface and the second load supporting surface the gangway structure can rest. The first load supporting surface and the second load supporting surface are arranged in one horizontal plane.

In a preferred embodiment the first sliding means has a cross-section, which is at least partially adapted to the cross-section of the first beam. In a preferred embodiment the geometric shape of the cross-section of the first sliding means is similar, preferably identical to the geometric shape of the free inner cross section of a hollow first beam. Preferably the geometric shape of the cross-section of the first sliding means and the geometric shape of free inner cross section of a hollow first beam, in which the first sliding means is arranged, is rectangular or triangular or polygonal or round or elliptic.

In a preferred embodiment the second sliding means has a cross-section, which is at least partially adapted to the cross-section of the second beam. In a preferred embodiment the geometric shape of the cross-section of the second sliding means is similar, preferably identical to the geometric shape of the free inner cross section of a hollow second beam. Preferably the geometric shape of the cross-section of the second sliding means and the geometric shape of free inner cross section of a hollow second beam, in which the second sliding means is arranged, is rectangular or triangular or polygonal or round or elliptic.

In a preferred embodiment, in a first operational state, in which the device has its minimal longitudinal extend, the first beam is arranged next to the second beam and the first beam does not protrude over the second beam in the longitudinal direction and the second beam does not protrude over the first beam in the longitudinal direction, and wherein in a second operational state, in which the device has its maximum longitudinal extend, the first beam protrudes over the second beam to a maximum extend, which is defined by a stopper surface on the connector contacting a stopper on the first beam, and the second beam protrudes over the first beam to a maximum extend, which is defined by a stopper surface on the connector contacting a stopper on the second beam.

In a preferred embodiment, the movement of the first beam along the first support surface is a sliding movement and/or the movement of the second beam along the second support surface is a sliding movement.

In an alternative, equally preferred embodiment, the movement of the first beam along the first support surface is a rolling motion of a rolling body arranged between a surface of the first beam and the first support surface and/or the movement of the second beam along the second support surface is a rolling motion of a rolling body arranged between a surface of the second beam and the second support surface.

In a preferred embodiment, the first sliding means has a downward facing base surface that is preferably arranged in a plane parallel to the plane, in which the second support surface of the second sliding means is arranged, wherein in this particular embodiment the second support surface preferably is a flat surface. The base surface of the first sliding means can be used to introduce a force that has been introduced from the gangway onto the second beam and from the second beam onto the second support surface through the second sliding means onto the first sliding means and from the first sliding means via the base surface onto a surface of the first beam arranged below and in contact with the base surface of the first sliding means.

In a preferred embodiment, the second sliding means has a downward facing base surface that is preferably arranged in a plane parallel to the plane, in which the first support surface of the first sliding means is arranged, wherein in this particular embodiment the first support surface preferably is a flat surface. The base surface of the second sliding means can be used to introduce a force that has been introduced from the gangway onto the first beam and from the first beam onto the first support surface through the first sliding means onto the second sliding means and from the second sliding means via the base surface onto a surface of the second beam arranged below and in contact with the base surface of the second sliding means.

In a preferred embodiment the connecting structure of the first beam has a connection part that is suitable for connection with the first car, preferably a connection plate. In a preferred embodiment a joint is arranged between the connection part and the remaining parts of the first beam. This joint allows for swivel movements of the connection part relative to the remainder of the first beam.

In a preferred embodiment the connecting structure of the second beam has a connection part that is suitable for connection with the first car, preferably a connection plate. In a preferred embodiment a joint is arranged between the connection part and the remaining parts of the second beam. This joint allows for swivel movements of the connection part relative to the remainder of the second beam.

In a further preferred embodiment, the first and/or second sliding means has a cross-section that is at least partially adapted to a cross-section of the first and/or second beam which can help to guide the sliding means with regard to the beam. A relatively big contact surface between the sliding means and a beam can reduce wear since the entire surface can be used or contribute to the bearing. Typical cross sections can be those of angle irons or other profile irons or circular or rectangular tubes.

In a preferred embodiment the sliding means can be moved into a first position in which the distance between the connecting structure of the beams is substantially equal or smaller than the length of the sliding means. This in general corresponds to a compressed position.

Further, the sliding means can be moved into a second position in which the distance between the connecting structure of the beams is substantially bigger than the length of the sliding means. It can also be thought of that the aforementioned distance is approximately equal or bigger than twice the length the sliding means or twice the length of the connector.

In another preferred embodiment the beams comprise at least one coupling element which couples the sliding means to the beam. Said coupling element consisting of or comprising at least one element selected from the group comprising a force coupling, a torque coupling or a magnetic coupling.

In a preferred embodiment the connecter has a first recess that extends along the longitudinal axis, whereby the first support surface is a surface that delimits one side of the first recess. In a preferred embodiment the first support surface is the lowest surface that delimits the first recess. In this embodiment, the element of the first beam, which is supported by the first support surface, preferably is a protrusion that protrudes from a base body of the first beam into the first recess. In a preferred embodiment, the protrusion is formed by a block that is fixed to the base body of the first beam. In a preferred embodiment the protrusion has a downward facing surface opposite the first support surface. In a preferred embodiment rolling bodies, especially preferred balls are arranged between the downward facing surface and the first support surface. In a preferred embodiment several balls are provided. In a preferred embodiment the balls are linked to each other by way of being arranged in a cage similar to a cage known from ball bearing arrangements. The cage can be attached to the protrusion. In a preferred embodiment a second row of balls is arranged between an upward facing surface of the protrusion and a downward facing surface of the connector that delimits the recess. This second row of balls can be used to transmit a force that has been transmitted from the gangway onto the second beam and from the protrusion of the second beam onto the connector now from the connector to the protrusion of the first beam via the balls and hence to the first beam. In a preferred embodiment, several protrusions are provided on the base body of the first beam, the protrusions being set apart from each other along the longitudinal axis of the first beam.

In a preferred embodiment the connecter has a second recess that extends along the longitudinal axis, whereby the second support surface is a surface that delimits one side of the second recess. In a preferred embodiment the second support surface is the lowest surface that delimits the second recess. In this embodiment, the element of the second beam, which is supported by the second support surface, preferably is a protrusion that protrudes from a base body of the second beam into the second recess. In a preferred embodiment, the protrusion is formed by a block that is fixed to the base body of the second beam. In a preferred embodiment the protrusion has a downward facing surface opposite the second support surface. In a preferred embodiment rolling bodies, especially preferred balls are arranged between the downward facing surface and the second support surface. In a preferred embodiment several balls are provided. In a preferred embodiment the balls are linked to each other by way of being arranged in a cage similar to a cage known from ball bearing arrangements. The cage can be attached to the protrusion. In a preferred embodiment a second row of balls is arranged between an upward facing surface of the protrusion and a downward facing surface of the connector that delimits the recess. This second row of balls can be used to transmit a force that has been transmitted from the gangway onto the first beam and from the protrusion of the first beam onto the connector now from the connector to the protrusion of the second beam via the balls and hence to the second beam. In a preferred embodiment, several protrusions are provided on the base body of the second beam, the protrusions being set apart from each other along the longitudinal axis of the second beam.

In a preferred embodiment a guide rail of the connector protrudes into the recess and a groove on the protrusion interacts with the guide rail to guide the movement of the protrusion. In an alternative a guide rail of the protrusion protrudes into a groove that opens into the recess, which interact to guide the movement of the protrusion.

In a preferred embodiment a connector with two recess has the shape of an z-beam (a beam with the cross-sectional area in the shape of the capital letter I in the font courier). In such an embodiment, the upward facing surface of the z-beam can be used as a further load supporting surface on which the gangway can be supported.

In a preferred embodiment, the beam comprises a stop for a movement of a hoop of the gangway structure, which is supported by the first and/or second beam. The stop can be arranged at the end of the first beam and/or second beam and is preferably positioned on top of each beam. The stop can be formed as a protrusion extending from the top surface of the first and/or second beam. A stop can be formed at both ends of the device. By this stop it can be prevented that the gangway structure can slip off the first and/or second beam in situations when the two cars and the gangway connecting the two cars are subjected to conditions which form an extreme range of an influence quantity, especially driving a curve having a very small curve radius.

The invention provides a gangway for connecting a first car with a second car and allowing passage of passengers from the first car to the second car, the gangway comprising at least one device as described above. Preferably, the gangway comprises two of the above-described devices for supporting a load of a gangway structure between two cars. The two devices can be positioned spaced apart, preferably in a substantially parallel orientation with regard to each other. However, the number of the devices described above which can form part of a gangway according to the invention, is not limited by two, a gangway according to the invention can comprise even more than two of the devices. The devices can be located in the area of or near the floor, the roof and/or the side of the gangway. According to the invention, the term "support" is not restricted to a support which has to be located in the area of or under the floor.

In a preferred embodiment, the gangway comprises a side wall of a gangway glidingly supported on at least one above-described device, preferably two above-described devices. In a preferred embodiment, the gangway has bellow support hoops, which are supported by at least one above-described device, preferably two above-described devices, preferably supported from below. In a preferred embodiment, the gangway has a centre frame, which is supported by at least one above-described device, preferably two above-described devices, preferably supported from below.

In a preferred embodiment, the gangway comprises panels forming at least a part of a floor of the gangway supported by the at least one, preferably two, devices as described above.

In a preferred embodiment the parts of the gangway that come into contact with the device rest on the device, but are not connected to the device. This allows the parts of the gangway to slide along the device.

In a preferred embodiment, the device is (or if more than one of the devices according to the invention is provided: all the devices are) located below the centre of mass of the gangway, preferably below the gangway. The gangway hence preferably is completely supported from below by the device.

The invention further provides a multi-car vehicle comprising a gangway as described above. In a preferred embodiment, the device is connected to the first car and the second car only via the respective connecting structure. Preferably the device is not supported on a buffer that might be arranged on the first car or the second car, although in an alternative embodiment it is feasible to add further support to the device by supporting it also on a puffer that might be arranged on the first car or the second car. Preferably the device is not supported on a part of a coupler that might be provided to connect the first car to the second car, although in an alternative embodiment it is feasible to add further support to the device by supporting it also on a part of a coupler that might be provided to connect the first car to the second car.

Below, the invention will be described with reference to figures that only show exemplary embodiments of the invention.

In those figures
- Fig. 1: shows a side view onto a device according to the invention in a partially extended position;
- Fig. 2: shows a cut along the line C-C in Fig. 1 viewed from above onto a device according to the invention in a partially extended position;
- Fig. 3: shows the device of Fig. 1 in a three-dimensional perspective view in a partially extended position, in a fully compressed position and in a fully extended position;
- Fig. 4: shows a perspective view of the exploded device according to the partially extended position as shown in Fig. 1 and Fig. 2;
- Fig. 5: shows a cut view along the line A-A and a cut along the line B-B Fig. 1 of the device;
- Fig. 6: shows a device according to another embodiment of the invention in a partially extended position and with a straight connector;
- Fig. 7: shows the device according to Fig. 6 in a perspective three-dimensional view; and
- Fig. 8: shows the device according to Fig. 6 and Fig. 7 in a cut view, wherein at least a part of a gangway structure is supported.

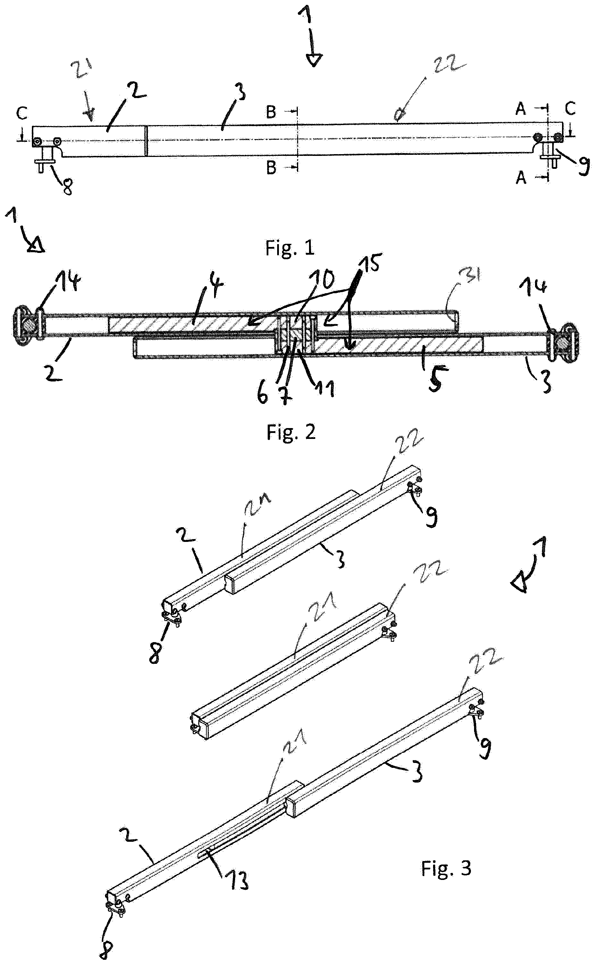

Figures 1 to 5 show a device 1 according to the invention in a first embodiment that comprises a hollow structure in form of tube like profiles for the first beam 2 and the second beam 3.

Figure 1 shows a side view onto a device 1 according to the invention in a partially extended position. The device 1 has a load supporting surface 21 facing upward on the first beam 2 and a load supporting surface 22 facing upward on the second beam 3, on which a structure of a gangway can rest. The device can support a structure of a gangway, which is situated between two cars of a multi-car vehicle. The beams 2, 3 are straight, of the same length and shape. The first beam 2 extends along a longitudinal axis. The second beam 3 extends along a longitudinal axis. The longitudinal axis of the first beam 2 and the longitudinal axis of the second beam 3 are parallel to the line C-C in Fig. 1. The first beam 2 has a connecting structure 8 and the second beam 3 has a connecting structure 9. The connecting structures 8, 9 comprise fastening means, for example screws, for attaching the device to a first car and a second car of a train. The load supporting surface 21 and the load supporting surface 22 are flush with the horizontal plane.

Figure 2 shows a C-C cut view according to Fig. 1 from above onto a device according to the invention in a partially extended position. The connector 15 connects the first beam 2 and the second beam 3 and comprises a first support surface 23 for the first beam 2 and a second support surface 24 for the second beam 3 that extend in a direction parallel to the common longitudinal axis, whereby an element of the first beam 2, namely the inward, downward facing surface of the hollow tube that forms the first beam 2 is supported by the first support surface 23 and can move along the first support surface 23. An element of the second beam 3, namely the inward, downward facing surface of the hollow tube that forms the first beam 3 is supported by the second support surface 24 and can move along the second support surface 24. Said support surfaces 23,24 are provided by the upper facing surfaces of a sliding means 4 and a sliding means 5.

The connector 15 further comprises the first sliding means 4 and the second sliding means 5. Said sliding means 4, 5 can be given by a rectangular tube like profile or bar that substantially form fits into the profile of the first beam 2 and the second beam 3 (see Fig. 5 B-B). Further, the first support surface 23 is arranged on the first sliding means 4, wherein the connector 15 has a second sliding means 5, whereby the second support surfaces 24 is arranged on the second sliding means 5, whereby the sliding means 4, 5 are connected to each other with fastening means 6, 7.

The hollow structure of each beam 2, 3 surrounds each sliding means 4, 5 that can slide within each beam 2,3 similar to a telescope mechanics. The fastening means 6, 7 extend through a guiding 13, visible in Fig. 3 in each of the beams 2, 3, wherein the guiding 13 extends in a direction perpendicular to the direction of the load that the gangway will apply to the beams 2, 3. The sliding means 4, 5 are slidingly guided in a longitudinal direction of the beams 2, 3. The guiding 13, visible in Fig. 3 is formed by an opening or aperture in the beam which has an elongated shape in the longitudinal direction of the beam. Ends of the guide 13 delimit the movement of the fastening means 6,7 inside the guide.

The fastening means 6, 7 are connecting inner portions 10, 11 in the longitudinal direction of the two sliding means 4, 5.

Near the ends of the device 1 a stop 14 is formed to stop movement of the structure of the supported gangway.

Figure 3 shows the device in a three-dimensional perspective view in a partially extended position and in a fully compressed position in which the distance between the connecting structures 8, 9 of the device 1 is substantially equal or smaller than the length of the sliding means 4, 5; and the sliding means 4, 5 are shown in a second position in which the distance between the connecting structure 8, 9 of the beams 2, 3 is significantly bigger than the length of the sliding means 4, 5. The device 1 is shown in a fully extended position in a third perspective view at the bottom. Here, the guiding 13 is shown in form of the wider slit in the wall of the first beam 2.

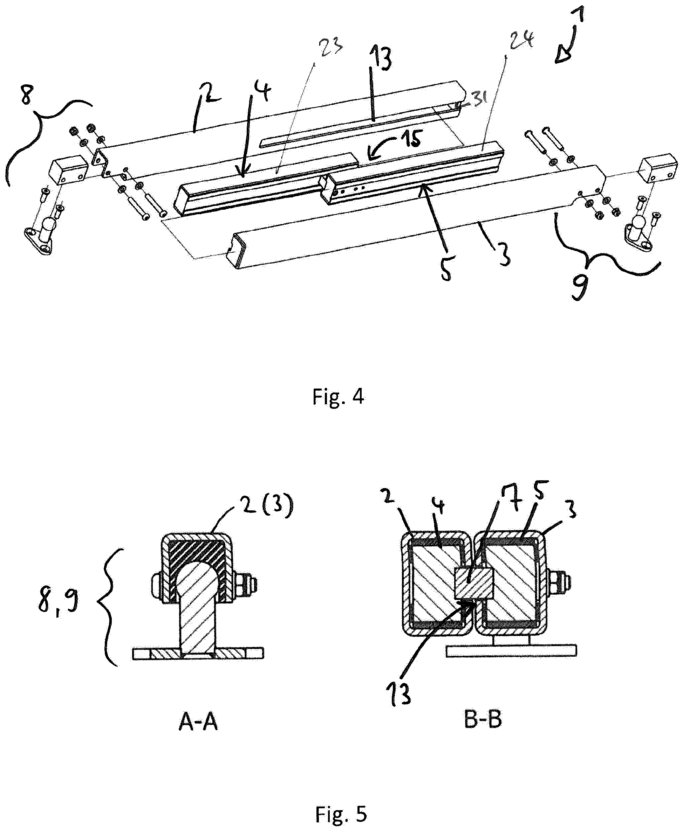

Figure 4 shows a perspective view of the exploded device in a partially extended position as shown in Fig. 1 and Fig. 2. The guiding 13 and more details of exemplary connecting structures 8, 9 can be seen.

Figurer 5 shows the device in an A-A cut view as well as in a B-B cut view according to the indicated lines in Fig. 1. The A-A cut shows a cross section of a connecting structure 8, 9 with a bearing that is similar to the single ball bearing. In this embodiment the beam 2, 3 is attached to the top of a cylindrical post. The B-B cut shows a cross section of the device approximately in the centre of the two connected beams 2, 3 that surround the sliding means 4, 5, wherein the sliding means 4, 5 are connected by fastening means 7 that can move along the guiding 13.

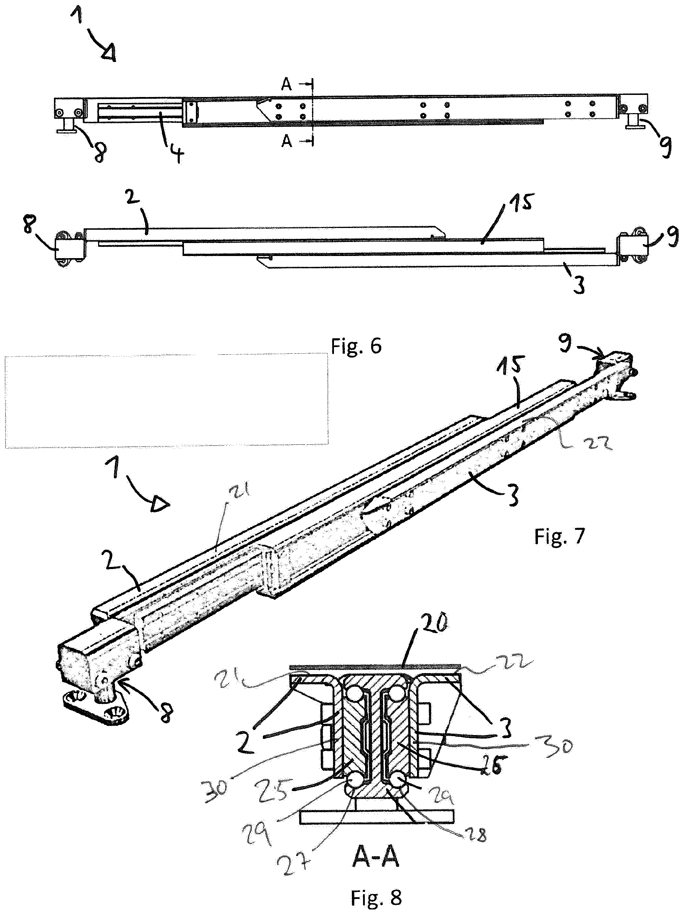

Figure 6 shows a device according to another embodiment of the invention in a partially extended position and with a straight connector 15. In this embodiment the first beam 2 and the second beam 3 have protrusions 25, 26 that extend from a base body 30 of the respective beam 2, 3 into recesses provided at the straight connector 15. The protrusions 25,26 have downward facing surfaces that each face an upward facing surface that delimits the recess; the upward facing surfaces being the surface of a channel or a trough and forming the first support surface 27 or second support surface 28. In between the downward facing surface of the protrusion 25, 26 and the first support surface 27 or the second support surface 28, respectively, are set balls 29 that allow the downward facing surface to move along the first support surface 27 or the second supports surface 28 respectively. The protrusions 25, 26 are screwed to the base body 30. As can be seen from set of four screws used to connect a protrusion 25, 26 to the base body 30 in Fig. 6 and Fig. 7, three protrusions are provided per base body of the first beam 2 and the second beam 3.

Figure 7 shows the device according to the second demonstrated embodiment of Fig. 6 in a perspective three-dimensional view.

Figure 8 shows the device according to Fig. 6 and Fig. 7 in a cut or cross-sectional view the centre, wherein at least a part of a gangway structure 20 is supported.

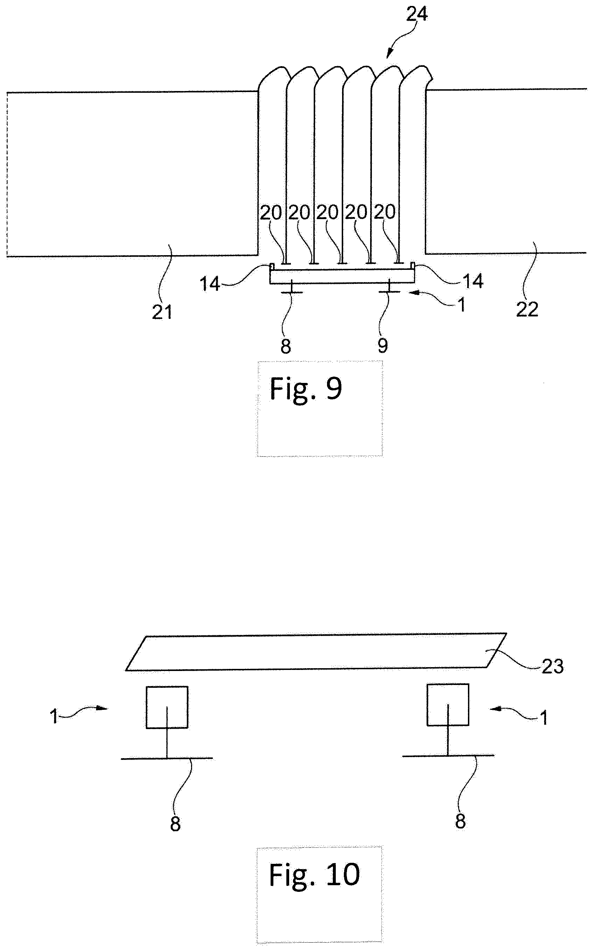

Figure 9 is a side view of the device 1 used in a multi-car vehicle to support a gangway structure 20 which are the hoops 20 of the gangway 24 between two cars 21, 22.

Figure 10 shows the embodiment of Fig. 7 in a longitudinal direction of the multi-car vehicle. Two devices 1 according to the invention which are spaced apart and substantially parallel to each other are used to support a gangway 24 structure formed as a panel 23 which forms part of the floor of the gangway 24.

## Claims

1. Device (1) for supporting a load of a gangway structure between a first car and a second car, the device (1) having
- a first beam (2) that extends along a first longitudinal axis and has a connecting structure (8) suitable to be connected to the first car and
- a second beam (3) that extends along a second longitudinal axis and has a connecting structure (9) suitable to be connected to the second car,
wherein the first longitudinal axis is parallel to the second longitudinal axis,
the device (1) comprising a connector (15), wherein
- the connector (15) has a first support surface (23,27) that extends in a direction parallel to the first longitudinal axis, whereby an element of the first beam (2) is supported by the first support surface (23,27) and can move along the first support surface (23,27), and
- the connector (15) has a second support surface (24,28) that extends in a direction parallel to the second longitudinal axis, whereby an element of the second beam (3) is supported by the second support surface (24,28) and can move along the second support surface (24,28),
**characterized in that**
the first beam (2) has a first load supporting surface (21) and the second beam (3) has a second load supporting surface (22) on which the gangway structure can directly rest, whereby the first load supporting surface (21) and the second load supporting surface (22) are arranged in one horizontal plane, wherein the connector (15) is adapted to hold the first and second beam (2, 3) next to each other.

2. Device according to claim 1, wherein the connector (15) has a first sliding means (4), whereby the first support surface (23) is arranged on the first sliding means (4), and has a second sliding means (5), whereby the second support surfaces (24) is arranged on the second sliding means (5), whereby the sliding means (4, 5) are connected to each other with fastening means (6, 7).

3. Device according claim 2, wherein the first beam (2) comprises a hollow structure and at least partially surrounds the first sliding means (4) and/or the second beam (3) comprises a hollow structure and at least partially surrounds the second sliding means.

4. Device according to claim 2 or 3, wherein the fastening means (6, 7) extend through a guide (13) provided in the first beam (2) and/or a guide provided in the second beam (3).

5. Device according to claim 4, wherein the guide (13) extends in a direction perpendicular to the direction of the load that the gangway will apply to the first beam (2) and the second beam (3).

6. Device according to any one of claims 2 to 5, wherein the first sliding means (4) has a cross-section, which is at least partially adapted to the cross-section of the first beam (2) and/or wherein the second sliding means (5) has a cross-section, which is at least partially adapted to the cross-section of the second beam (3).

7. Device according to any one of claims 1 to 6, wherein in a first operational state, in which the device has its minimal longitudinal extend, the first beam (2) is arranged next to the second beam (3) and the first beam (2) does not protrude over the second beam (3) in the longitudinal direction and the second beam (3) does not protrude over the first beam (2) in the longitudinal direction, and wherein in a second operational state, in which the device has its maximum longitudinal extend, the first beam (2) protrudes over the second beam (3) to a maximum extend, which is defined by a stopper surface on the connector (15) contacting a stopper on the first beam (2), and the second beam (3) protrudes over the first beam (2) to a maximum extend, which is defined by a stopper surface on the connector (15) contacting a stopper on the second beam (3).

8. Device according to any one of claims 1 to 7, wherein movement of the first beam (2) along the first support surface (23, 27) is a sliding movement and/or wherein movement of the second beam (3) along the second support surface (24, 28) is a sliding movement

9. Device according to any one of claims 1 to 7, wherein movement of the first beam (2) along the first support surface is a rolling motion of a rolling body arranged between a surface of the first beam (2) and the first support surface and/or wherein movement of the second beam (3) along the second support surface is a rolling motion of a rolling body arranged between a surface of the second beam (3) and the second support surface.

10. Device according to any one of claims 2 to 9,
wherein the first beam (2) comprises a stop (14) for a movement of the sliding means (4) arranged near an end of the first beam (2).

11. Gangway for connecting a first car with a second car and allowing passage of passengers from the first car to the second car, comprising at least one device according to claims 1 to 10.

12. Gangway according to claim 11, comprising a sidewall of the gangway glidingly supported on the at least one device according to claims 1 to 10.

13. Gangway according to claim 11 or 12 further comprising panels forming at least a part of a floor of the gangway supported by the at least one device according to claims 1 to 10.

14. Multi-car vehicle comprising a gangway according to claims 11 to 13 and a first car and a second car, the gangway allowing passage of passengers from the first car to the second car.

## Patentansprüche

1. Vorrichtung (1) zum Tragen einer Last einer Gangwaystruktur zwischen einem ersten Wagen und einem zweiten Wagen, wobei die Vorrichtung (1) aufweist:
- einen ersten Träger (2), der sich entlang einer ersten Längsachse erstreckt und eine Verbindungsstruktur (8) aufweist, die geeignet ist, mit dem ersten Wagen verbunden zu werden, und
- einen zweiten Träger (3), der sich entlang einer zweiten Längsachse erstreckt und eine Verbindungsstruktur (9) aufweist, die geeignet ist, mit dem zweiten Wagen verbunden zu werden,
wobei die erste Längsachse parallel zur zweiten Längsachse verläuft,
wobei die Vorrichtung (1) einen Verbinder (15) umfasst, wobei
- der Verbinder (15) eine erste Stützfläche (23, 27) aufweist, die sich in einer Richtung parallel zu der ersten Längsachse erstreckt, wobei ein Element des ersten Trägers (2) von der ersten Stützfläche (23, 27) gestützt wird und sich entlang der ersten Stützfläche (23, 27) bewegen kann, und
- der Verbinder (15) eine zweite Stützfläche (24, 28) aufweist, die sich in einer Richtung parallel zu der zweiten Längsachse erstreckt, wobei ein Element des zweiten Trägers (3) von der zweiten Stützfläche (24, 28) gestützt wird und sich entlang der zweiten Stützfläche (24, 28) bewegen kann,
**dadurch gekennzeichnet, dass**
der erste Balken (2) eine erste lasttragende Oberfläche (21) aufweist und der zweite Balken (3) eine zweite lasttragende Oberfläche (22) aufweist, auf denen die Gangwaystruktur direkt aufliegen kann, wobei die erste lasttragende Oberfläche (21) und die zweite lasttragende Oberfläche (22) in einer horizontalen Ebene angeordnet sind, wobei der Verbinder (15) geeignet ist, den ersten und zweiten Balken (2, 3) nebeneinander zu halten.

2. Vorrichtung nach Anspruch 1, wobei der Verbinder (15) ein erstes Gleitmittel (4) aufweist, wobei die erste Stützfläche (23) auf dem ersten Gleitmittel (4) angeordnet ist, und ein zweites Gleitmittel (5) aufweist, wobei die zweite Stützfläche (24) auf dem zweiten Gleitmittel (5) angeordnet ist, wobei die Gleitmittel (4, 5) mit Befestigungsmitteln (6, 7) miteinander verbunden sind.

3. Vorrichtung nach Anspruch 2, wobei der erste Träger (2) eine hohle Struktur aufweist und das erste Gleitmittel (4) zumindest teilweise umgibt und/oder der zweite Träger (3) eine hohle Struktur aufweist und das zweite Gleitmittel zumindest teilweise umgibt.

4. Vorrichtung nach Anspruch 2 oder 3, wobei sich die Befestigungsmittel (6, 7) durch eine im ersten Träger (2) vorgesehene Führung (13) und/oder eine im zweiten Träger (3) vorgesehene Führung erstrecken.

5. Vorrichtung nach Anspruch 4, wobei sich die Führung (13) in einer Richtung erstreckt, die senkrecht zur Richtung der Last verläuft, die die Gangway auf den ersten Träger (2) und den zweiten Träger (3) ausübt.

6. Vorrichtung nach einem der Ansprüche 2 bis 5, wobei das erste Gleitmittel (4) einen Querschnitt aufweist, der zumindest teilweise an den Querschnitt des ersten Trägers (2) angepasst ist, und/oder wobei das zweite Gleitmittel (5) einen Querschnitt aufweist, der zumindest teilweise an den Querschnitt des zweiten Trägers (3) angepasst ist.

7. Vorrichtung nach einem der Ansprüche 1 bis 6, wobei in einem ersten Betriebszustand, in dem die Vorrichtung ihre minimale Längserstreckung aufweist, der erste Träger (2) neben dem zweiten Träger (3) angeordnet ist und der erste Träger (2) den zweiten Träger (3) in der Längsrichtung nicht überragt und der zweite Träger (3) den ersten Träger (2) in der Längsrichtung nicht überragt, und wobei in einem zweiten Betriebszustand, in dem die Vorrichtung ihre maximale Längserstreckung aufweist, der erste Träger (2) über den zweiten Träger (3) bis zu einer maximalen Erstreckung vorsteht, die durch eine Anschlagfläche am Verbinder (15) definiert ist, die einen Anschlag am ersten Träger (2) berührt, und der zweite Träger (3) über den ersten Träger (2) bis zu einer maximalen Erstreckung vorsteht, die durch eine Anschlagfläche am Verbinder (15) definiert ist, die einen Anschlag am zweiten Träger (3) berührt.

8. Vorrichtung nach einem der Ansprüche 1 bis 7, wobei die Bewegung des ersten Trägers (2) entlang der ersten Stützfläche (23, 27) eine Gleitbewegung ist und/oder wobei die Bewegung des zweiten Trägers (3) entlang der zweiten Stützfläche (24, 28) eine Gleitbewegung ist.

9. Vorrichtung nach einem der Ansprüche 1 bis 7, wobei die Bewegung des ersten Trägers (2) entlang der ersten Stützfläche eine Rollbewegung eines Rollkörpers ist, der zwischen einer Oberfläche des ersten Trägers (2) und der ersten Stützfläche angeordnet ist, und/oder wobei die Bewegung des zweiten Trägers (3) entlang der zweiten Stützfläche eine Rollbewegung eines Rollkörpers ist, der zwischen einer Oberfläche des zweiten Trägers (3) und der zweiten Stützfläche angeordnet ist.

10. Vorrichtung nach einem der Ansprüche 2 bis 9, wobei der erste Träger (2) einen Anschlag (14) für eine Bewegung des Gleitmittels (4) aufweist, der nahe einem Ende des ersten Trägers (2) angeordnet ist.

11. Gangway zum Verbinden eines ersten Wagens mit einem zweiten Wagen und zum Ermöglichen des Durchgangs von Fahrgästen von dem ersten Wagen zu dem zweiten Wagen, mit mindestens einer Vorrichtung nach einem der Ansprüche 1 bis 10.

12. Gangway nach Anspruch 11, umfassend eine Seitenwand der Gangway, die gleitend auf der mindestens einen Vorrichtung nach einem der Ansprüche 1 bis 10 aufliegt.

13. Gangway nach Anspruch 11 oder 12, die ferner Platten umfasst, die zumindest einen Teil eines Bodens der von der mindestens einen Vorrichtung nach einem der Ansprüche 1 bis 10 getragenen Gangways bilden.

14. Mehrteiliges Fahrzeug mit einer Gangway nach einem der Ansprüche 11 bis 13 und einem ersten Wagen und einem zweiten Wagen, wobei die Gangway den Übergang von Fahrgästen vom ersten Wagen zum zweiten Wagen ermöglicht.

## Revendications

1. Dispositif (1) destiné à supporter une charge d'une structure de passerelle entre une première voiture et une seconde voiture, le dispositif (1) présentant :
- une première poutre (2), laquelle s'étend le long d'un premier axe longitudinal et présente une structure de liaison (8) convenant pour être reliée à la première voiture, et
- une seconde poutre (3), laquelle s'étend le long d'un second axe longitudinal et présente une structure de liaison (9) convenant pour être reliée à la seconde voiture, dans lequel le premier axe longitudinal est parallèle au second axe longitudinal,
le dispositif (1) comprenant un connecteur (15), dans lequel
- le connecteur (15) présente une première surface de support (23, 27), laquelle s'étend dans une direction parallèle au premier axe longitudinal, attendu qu'un élément de la première poutre (2) est supporté par la première surface de support (23, 27), et peut se déplacer le long de la première surface de support (23, 27), et
- le connecteur (15) présente une seconde surface de support (24, 28), laquelle s'étend dans une direction parallèle au second axe longitudinal, attendu qu'un élément de la seconde poutre (3) est supporté par la seconde surface de support (24, 28) et peut se déplacer le long de la seconde surface de support (24, 28),
**caractérisé en ce que**
la première poutre (2) présente une première surface de support de charge (21), et la seconde poutre (3) présente une seconde surface de support de charge (22) sur lesquelles la structure de passerelle peur reposer directement, attendu que la première surface de support de charge (21) et la seconde surface de support de charge (22) sont agencées dans un plan horizontal, dans lequel le connecteur (15) est apte à tenir les première et seconde poutres (2,3) l'une à côté de l'autre.

2. Dispositif selon la revendication 1, dans lequel le connecteur (15) présente un premier moyen de coulissement (4), attendu que la première surface de support (23) est agencée sur le premier moyen de coulissement (4), et présente un second moyen de coulissement (5) ; attendu que la seconde surface de support (24) est agencée sur le second moyen de coulissement (5), et attendu que les moyens de coulissement (4,5) sont reliés l'un à l'autre avec des moyens de fixation (6,7).

3. Dispositif selon la revendication 2, dans lequel la première poutre (2) comprend une structure creuse et entoure au moins en partie le premier moyen de coulissement (4), et/ou la seconde poutre (3) comprend une structure creuse et entoure au moins en partie le second moyen de coulissement.

4. Dispositif selon la revendication 2 ou 3, dans lequel les moyens de fixation (6, 7) s'étendent à travers un guide (13) prévu dans la première poutre (2) et/ou un guide prévu dans la seconde poutre (3).

5. Dispositif selon la revendication 4, dans lequel le guide (13) s'étend dans une direction perpendiculaire à la direction de la charge que la passerelle applique sur la première poutre (2) et la seconde poutre (3).

6. Dispositif selon l'une quelconque des revendications 2 à 5, dans lequel le premier moyen de coulissement (4) présente une section transversale, laquelle est au moins en partie adaptée à la section transversale de la première poutre (2), et/ou dans lequel le second moyen de coulissement (5) présente une section transversale, laquelle est au moins en partie adaptée à la section transversale de la seconde poutre (3).

7. Dispositif selon l'une quelconque des revendications 1 à 6, dans lequel dans un premier état de fonctionnement, où le dispositif présente une situation longitudinale minimale, la première poutre (2) est agencée à proximité de la seconde poutre (3), et la première poutre (2) ne fait pas saillie par-dessus la seconde poutre (3) dans la direction longitudinale, et la seconde poutre (3) ne fait pas saillie par-dessus la première poutre (2) dans la direction longitudinale, et dans lequel dans un second état de fonctionnement, où le dispositif présente sa situation longitudinale maximale, la première poutre (2) fait saillie par-dessus la seconde poutre (3) jusqu'à une situation maximale, laquelle est définie par une surface de butée sur le connecteur (15) en contact avec une butée sur la première poutre (2), et la seconde poutre (3) fait saillie par-dessus la première poutre (2) jusqu'à une situation maximale, laquelle est définie par une surface de butée sur le connecteur (15) en contact avec une butée sur la seconde poutre (3).

8. Dispositif selon l'une quelconque des revendications 1 à 7, dans lequel un déplacement de la première poutre (2) le long de la première surface de support (23, 27) est un déplacement de coulissement, et/ou dans lequel le déplacement de la seconde poutre (3) le long de la seconde surface support (24, 28) est un déplacement de coulissement.

9. Dispositif selon l'une quelconque des revendications 1 à 7, dans lequel le déplacement de la première poutre (2) le long de la première surface de support est un mouvement de roulement d'un corps roulant agencé entre une surface de la première poutre (2) et la première surface de support, et/ou le déplacement de la seconde poutre (3) le long de la seconde surface de support est un mouvement de roulement d'un corps roulant agencé entre une surface de la seconde poutre (3) et la seconde surface de support.

10. Dispositif selon l'une quelconque des revendications 2 à 9, dans lequel la première poutre (2) comprend une butée (14) pour un déplacement du moyen de coulissement (4) agencé à proximité d'une extrémité de la première poutre (2).

11. Passerelle destinée à relier une première voiture avec une seconde voiture, et permettant le passage de passagers de la première voiture à la seconde voiture comprenant au moins dispositif selon l'une quelconque des revendications 1 à 10.

12. Passerelle selon la revendication 11, comprenant une cloison latérale de la passerelle supportée par glissement sur le au moins un dispositif selon l'une quelconque des revendications 1 à 10.

13. Passerelle selon la revendication 11 ou 12, comprenant en outre des panneaux formant au moins une partie d'un plancher de la passerelle supportée par le au moins un dispositif selon l'une quelconque des revendications 1 à 10.

14. Véhicule à plusieurs voitures comprenant une passerelle selon la revendication 11 à 13, et une première voiture et une seconde voiture, la passerelle permettant le passage de passagers de la première voiture à la seconde voiture.
